Europäisches Patentamt

European Patent Office

Office européen des brevets

(11) Publication number: **0 305 558 B1**

(12) **EUROPEAN PATENT SPECIFICATION**

(45) Date of publication of patent specification: **08.07.92**　(51) Int. Cl.⁵: **B60C 9/26**

(21) Application number: **87112684.3**

(22) Date of filing: **31.08.87**

Divisional application 91202488.2 filed on
31/08/87.

(54) **Pneumatic tire.**

(43) Date of publication of application:
**08.03.89 Bulletin 89/10**

(45) Publication of the grant of the patent:
**08.07.92 Bulletin 92/28**

(84) Designated Contracting States:
**DE FR GB IT**

(56) References cited:
**GB-A- 2 015 937**
**GB-A- 2 061 202**
**GB-A- 2 070 526**
**LU-A- 52 591**

(73) Proprietor: **Bridgestone Corporation**
**10-1, Kyobashi 1-Chome Chuo-Ku**
**Tokyo 104(JP)**

(72) Inventor: **Watanabe, Tadashi c/o Bridgestone**
**Corporation**
**Technical Center, 3-1-1 Ogawahigashi-cho**
**Kodaira-shi Tokyo(JP)**
Inventor: **Nishide, Seiichiro c/o Bridgestone**
**Corporation**
**Technical Center, 3-1-1 Ogawahigashi-cho**
**Kodaira-shi Tokyo(JP)**

(74) Representative: **Whalley, Kevin et al**
**MARKS & CLERK 57/60 Lincoln's Inn Fields**
**London WC2A 3LS(GB)**

## Description

The present invention relates to a pneumatic tire comprising a carcass made up for layers of cords and extending from one bead to the other bead, a tread portion disposed radially outwardly of the carcass and extending in a circumferential direction of said tire, a belt disposed between said carcass and said tread portion, and a reinforcing layer disposed between said tread portion and said belt, said reinforcing layer being formed by hooping a continuous strip spirally in the circumferential direction.

A tire of this kind, according to the preamble of claim 1, is disclosed by the GB-A 2 061 202. This document shows an annular reinforcing structure. To improve the resistance to fatigue and to high speeds and to achieve good driving behavior and a low resistance to rolling, the lateral portions of the radially outermost layer are covered by the annular reinforcing structure constituted by two radially overlapping turns of metallic cords. The reinforcing structure is formed by winding a single wire around a layer. The external edge of the reinforcing structure coincides substantially with the edge of the layer. In the reinforcing structure, the two strips are connected to one another by a turn of cord on the centre part of the layer that maintains the continuity of the wire between one strip and the other.

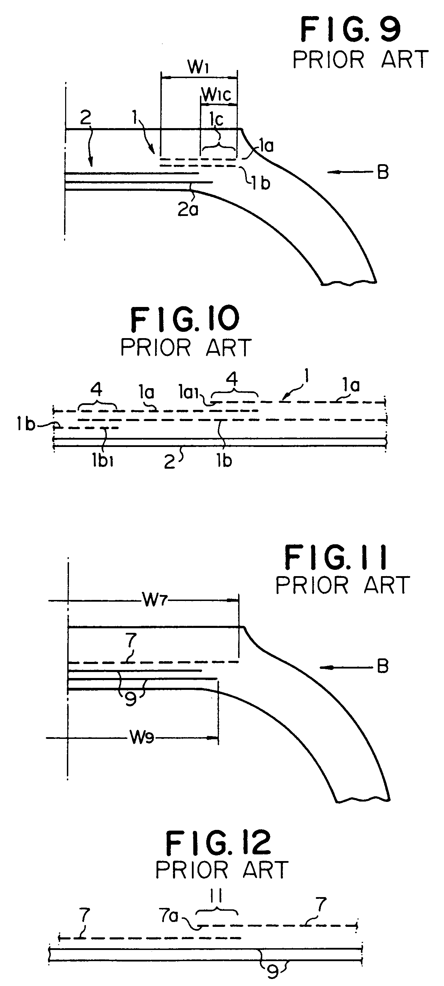

Further examples of the prior art are shown in Fig. 9 and 10 showing a conventional radial pneumatic tire which is used at high speeds and which includes a belt reinforcing layer 1 consisting of two layers 1a and 1b each having a predetermined width $W_1$ and disposed radially outwardly of a lateral end portion 2a of a belt 2. Each reinforcing layer is composed of cords. The cords extend substantially in the circumferential direction of the tire and are covered with rubber. The lower reinforcing layer 1b is hooped around the belt 2, and then the longitudinal end portions $1b_1$ (Fig. 10) are overlapped with each other. Likewise, the upper reinforcing layer 1a is hooped on the lower reinforcing layer 1b previously hooped on the belt 2, and the longitudinal end portions $1a_1$ (Fig. 10) are overlapped with each other and vulcanized. Thus, the reinforcing layers 1a and 1b of the conventional tire form overlapped portions 4, respectively. In Figs. 11 and 12 is shown another conventional radial pneumatic tire which is used at high speeds and which includes a belt reinforcing cap 7 of a predetermined width $W_7$ disposed radially outwardly of a belt 9 and covering a full width $W_9$ of the belt 9. The reinforcing cap 7 is composed of cords. The cords extend substantially in the circumferential direction of the tire and are covered with rubber. The reinforcing cap 7 is hooped around the belt 9, and then the longitudinal end portions 7a (Fig. 12) are overlapped with each other and vulcanized. Thus, the reinforcing cap 7 of the conventional tire also form an overlapped portion 11.

In both cases of the reinforcing layer 1 and the reinforcing cap 7, at least one overlapped portion 4 or 11 is formed on the circumference of the tire, and therefore the longitudinal end portions $1a_1$, and $1b_1$ and 7a of the overlapped portions 4 and 11 slip each other and loosen, thereby weakening the tightening effect of the reinforcing layer and cap. Also, since the reinforcing lay 1 and the reinforcing cap 7 are increased in thickness due to the overlapped portions 4 and 11, thereby reducing an uniformity level of the tire and degrading a comfortable riding performance. Furthermore, in the lateral end portion 2a of the belt 2 shown in Fig. 9, the width of the upper reinforcing layer 1a can be reduced to a width $W_{1c}$ smaller than a full width $W_1$ of the lower reinforcing layer 1b in order that the belt 2 is tightened by the reinforcing layer 1, but if different layers of narrow and wide widths are used, two kinds of reinforcing layers different in width must be prepared. Furthermore, if the reinforcing cap 7 as shown in Fig. 11 is further used, the cap of the width $W_7$ must also be prepared in addition to the two kinds of layers. As a result, there is the disadvantage that various kinds of belt reinforcing layers and caps are required.

It is accordingly an important object of the present invention to provide an improved pneumatic tire which prevents and overcomes the aforementioned disadvantages with the prior art.

To comply with this object, the tire according to the invention as defined in claim 1 is characterized in that the strip has a rectangular cross section and is composed of 2 to 12 cords covered with rubber so that the lateral edges of the belt are completely covered and the ends of the continuous ribbon-like strip do not overlap each other.

The drawbacks of a prior-art pneumatic tire and the features and advantages of a pneumatic tire according to the present invention will be more clearly understood from the following description taken in conjunction with the accompanying drawings in which:

Fig. 1 is a part-sectional view of a first embodiment of the pneumatic tire in accordance with the present invention;

Fig. 2 is an enlarged sectional view of the ribbon-like strip and the belt shown in Fig. 1;

Fig. 3 is an enlarged sectional view showing cords of the ribbon-like strip shown in Fig. 2;

Fig. 4 is a part-sectional view showing a belt reinforcing layer of a ribbon-like strip hooped on a belt in accordance with a second embodiment of the present invention;

Fig. 5 is a part-sectional view showing a belt reinforcing layer of a ribbon-like strip hooped on a belt in accordance with a third embodiment of the present invention;

Fig. 6 is a part-sectional view showing a belt reinforcing layer of a ribbon-like strip hooped on a belt according to a fourth embodiment of the present invention;

Fig. 7 is a view showing the manner in which a belt reinforcing layer of a ribbon-like strip is hooped on a belt in accordance with a fifth embodiment of the present invention;

Fig. 8 is a view showing the manner in which two belt reinforcing layer of a ribbon-like strip are hooped on a belt in accordance with a sixth embodiment of the present invention;

Fig. 9 is a part-sectional view showing a pneumatic tire of the prior art, two belt reinforcing layers being hooped on a laterally end portion of the belt;

Fig. 10 is a side sectional view, taken from an arrow B of Fig. 9, showing that longitudinal end portions of the reinforcing layers are overlapped with each other;

Fig. 11 is a part-sectional view showing a pneumatic tire of the prior art wherein the belt reinforcing cap is hooped over a full width of the belt;

Fig. 12 is a side sectional view, taken from an arrow B of Fig. 11, showing that longitudinal end portions of the reinforcing cap are overlapped with each other.

Fig. 13 is a view showing the manner in which a belt reinforcing layer of a ribbon-like strip is hooped on a belt in accordance with a seventh embodiment of the present invention; and

Fig. 14 is a view showing the manner in which a belt reinforcing layer of a ribbon-like strip is hooped on a belt in accordance with an eighth embodiment of the present invention;

## DESCRIPTION OF THE PREFERRED EMBODIMENTS

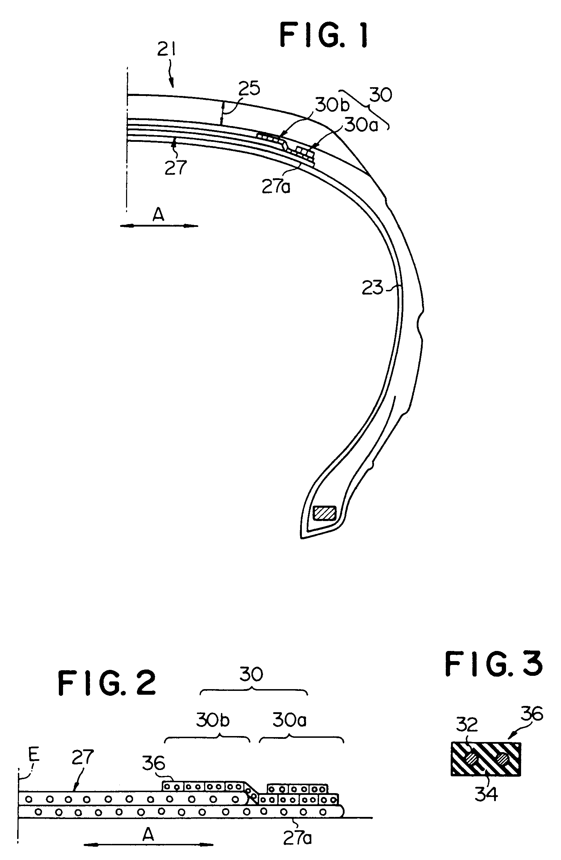

Referring to Fig. 1 of the drawings, a radial pneumatic tire according to a first embodiment of the present invention is generally designated by reference numeral 21. The radial pneumatic tire 21 comprises a carcass 23 made up of layers of cord materials and extending from one bead to the other bead, a tread portion 25 disposed radially outwardly of the carcass 23 and extending in a circumferential direction of the tire, a belt 27 disposed between the carcass 23 and the tread portion 25, and a belt reinforcing layer 30 disposed between the tread portion 25 and the belt 27. The reinforcing layer 30 is formed by hooping a continuous ribbon-like strip 36, which is composed of two to twelve cords 32 covered with rubber 34, on the belt 27 spirally in the circumferential direction of the tire. In this embodiment, the cords 32 of the ribbon-like strip 36 comprises two nylon cords as shown in Fig. 3. When the ribbon-like strip 36 of two cords 32 is used, there is the advantage that the number of hoops of the continuous ribbon-like strip 36 can be reduced by half as compared with a ribbon-like material of one cord, thereby enhancing an efficiency of production. The continuous ribbon-like strip 36 forming the belt reinforcing layer 30 is capable of being hooped with a variable hooping density in a lateral direction of the tire indicated by an arrow A in Fig. 2. More particularly, the reinforcing layer 30 of a laterally outer end portion 27a of the belt 27 comprises an outer reinforcing layer 30a and an inner reinforcing layer 30b, and in the outer reinforcing layer 30a, the ribbon-like strip 36 is hooped in two layers, and in the inner reinforcing layer 30b, the ribbon-like strip 36 is hooped in one layer. Thus, the hooping density of the hooped ribbon-like strip 36 is reduced at the inner reinforcing layer 30b than at the outer reinforcing layer 30a.

The operation of the aforementioned first embodiment according to the present invention will be hereinafter described.

As mentioned above, the continuous ribbon-like material 36 forming the belt reinforcing layer 30 is capable of being hooped with a variable hooping density in the lateral direction of the tire, and therefore, the hooping density can be increased gradually toward the outer end portion 27a of the belt 27 which should be more tightened, and decreased gradually toward a mid-circumferential portion E of the belt 27 which should be less tightened. Furthermore, the reinforcing layer 30 is formed by hooping spirally many times the continuous ribbon-like strip 36 composed of two to twelve cords 32 covered with rubber 34, and therefore there is no overlapped longitudinal end portions which are formed in the aforementioned prior art. As a consequence, the belt reinforcing layer 30 according to the present invention is effectively prevented from slipping and loosening, thereby considerably enhancing the tightening effect of the belt and the tire durability performance at high speeds. In addition, since the continuous ribbon-like strip 36 is hooped spirally, the leading and trailing end portions thereof are effectively prevented from being overlapped with each other, and therefore an uniformity level of the tire cannot be reduced and a comfortable riding performance of the tire cannot be degraded. Furthermore, since a narrow reinforcing layer and a wide reinforcing layer can be made by varying the hooping density of the continuous ribbon-like strip 36, only one kind of a material is required to make the ribbon-like strip 36, thereby considerably reducing the cost of production.

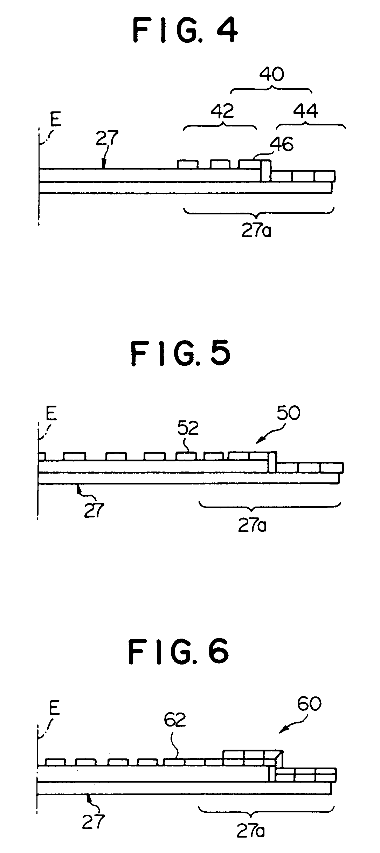

Referring to Fig. 4, there is shown a belt reinforcing layer 40 of a ribbon-like strip 46 hooped on a belt 27 in accordance with a second embodiment of the present invention. The reinforcing layer 40 comprises a laterally inner reinforcing layer 42 which is hooped on a laterally outer end portion 27a of the belt 27 with a predetermined spacing in the lateral direction of the tire, and a laterally outer reinforcing layer 44 which is hooped on the laterally outer end portion 27a of the belt 27 without the spacing. As a result, the hooping density of the continuous ribbon-like strip 46 forming the reinforcing layer 40 is reduced from the outer reinforcing layer 44 toward the inner reinforcing layer 42. Other members are substantially identical in construction and operation to those of the first embodiment and therefore the description will be hereinafter omitted.

Referring to Fig. 5, there is shown a third embodiment of the present invention. In this embodiment, a reinforcing layer 50 is used as a cap. That is, a continuous ribbon-like strip 52 forming the reinforcing layer 50 is hooped over the full width of the belt 27 so that the spacing between the adjacent looped portions is gradually reduced from a mid-circumferential portion E of the tire toward opposite outer end portions 27a of the belt 27. More particularly, at the opposite outer end portions 27a, the ribbon-like strip 52 is hooped without the spacing between the adjacent looped portions thereof. When the reinforcing layer is one layer at the outer end portion of the belt as shown in Figs. 4 and 5, it is desirable that the width of the ribbon-like strip 52 be between 4 mm and 6 mm. If the width is less than 4 mm, the cost of production is increased, and if the width is more than 6 mm, the ribbon-like strip of the reinforcing layer protrudes from the lateral end of the belt when it is hooped, so that cracks occur at the protruded portion. Other members are substantially identical in construction and operation to those of the second embodiment and therefore the description will be hereinafter omitted.

Referring to Fig. 6, there is shown a fourth embodiment of the present invention. A reinforcing layer 60 is provided over the full width of the belt 27. A continuous ribbon-like strip 62 forming the reinforcing layer 60 is hooped so that the spacing between the adjacent looped portions thereof is gradually reduced from a mid-circumferential portion E of the tire toward the opposite outer end portion 27a of the belt 27. At the outer end portion 27a, the ribbon-like strip 62 is hooped in two layers without the spacing between the adjacent looped portions thereof. Thus, in this embodiment, the hooping density is increased at the opposite outer end portion 27a than the third embodiment shown in Fig. 5. When the reinforcing layer is hooped in two layers at the outer end portion of the belt as shown in Fig. 6, it is desirable that the width of the ribbon-like strip be between 4 mm and 11 mm. If the width is less than 4 mm, the cost of production is increased, and if the width is more than 11 mm, the ribbon-like strip of the reinforcing layer protrudes from the lateral end of the belt when it is hooped, so that cracks occur at the protruded portion. Other members are substantially identical in construction and operation to those of the third embodiment and therefore the description will be hereinafter omitted.

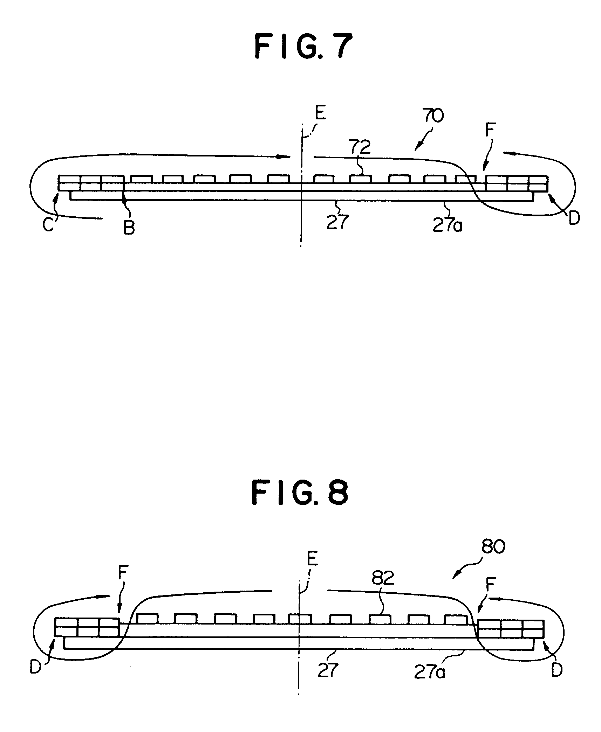

Referring to Fig. 7, there is shown the manner in which a belt reinforcing layer 70 of a ribbon-like strip 72 is hooped on the belt 27 in accordance with a fifth embodiment of the present invention. The ribbon-like strip 72 is first hooped leftward of Fig. 7 from a position B to a lateral left end C. At the lateral end C, the ribbon-like strip 72 is turned back to the position B to be two layers. The reinforcing layer 70 becomes one layer from the position B and the hooping density is gradually decreased toward the mid-circumferential position E. After passing the mid-circumferential position E, the ribbon-like strip 72 is hooped so that the hooping density is gradually increased toward a lateral right end D. At the lateral right end D, the ribbon-like strip 72 is again turned back to the mid-circumferential position E to be in two layers, and the hooping is completed at a position F. Thus, the ribbon-like strip 72 is hooped with a locus of a generally inverted letter S indicated by the arrow in Fig. 7. As a result, the reinforcing layer 70 as shown in Fig. 7 can be easily formed continuously by a single ribbon-like strip 72.

Referring to Fig. 8, there is shown a sixth embodiment according to the present invention. The sixth embodiment is identical to the fifth embodiment of Fig. 7 except that two ribbon-like strips 82 forming a reinforcing layer 80 are used. The two ribbon-like strips 82 are hooped in opposite directions from the mid-circumferential position E to opposite ends D and D, and turned back at the ends D and D toward the mid-circumferential position E, and the hooping of the two ribbon-like strips 82 are completed at positions F and F. In this embodiment, two ribbon-like strips are used, but the reinforcing layer 80 can also be easily formed.

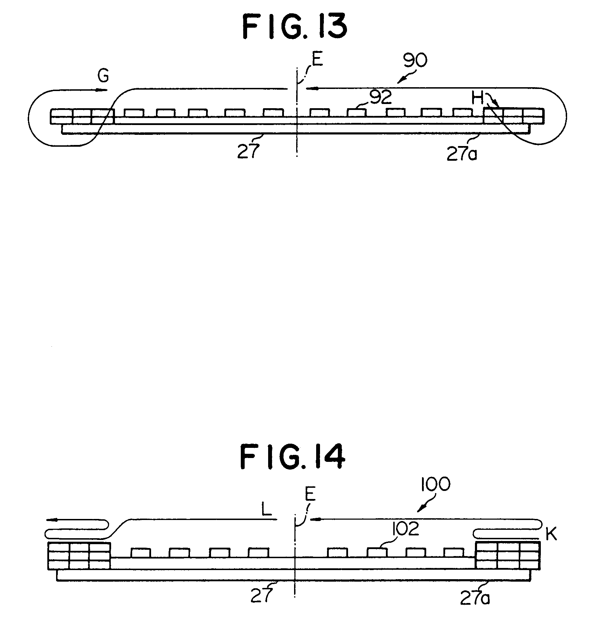

Fig. 13 shows the manner in which a belt reinforcing layer 90 of a ribbon-like strip 92 is hooped on the belt 27 in accordance with a seventh embodiment of the present invention. The ribbon-like strip 92 is first hooped laterally outward from a position H to the lateral edge of the belt 27, and turned back toward the mid-circumferential position E and turned back again at the other lateral edge of the belt 27 and terminated at a position G. It is noted that two ribbon-like strips 92 may be hooped from the positions H and E at the same time.

Fig. 14 shows the manner in which a belt reinforcing layer 100 of a ribbon-like strip 102 is hooped on the belt 27 in accordance with an eighth embodiment of the present invention. In this embodiment, the ribbon-like strip 102 is hooped so as be three layers at the opposite outer end portions 27a of the belt 27. It is noted that two ribbon-like strips 102 may be hooped from positions K and L at the same time.

While certain representative embodiments and details have been shown for the purpose of illustrating the invention, it will be apparent to those skilled in this art that various changes and modifications may be made therein without departing from the scope of the invention as defined by the appended claims.

## Claims

1. A pneumatic tire comprising

   a carcass (23) made up of layers of cords and extending from one bead to the other bead,

   a tread portion (25) disposed radially outwardly of the carcass (23) and extending in a circumferential direction of said tire,

   a belt (27) disposed between said carcass (23) and said tread portion (25), and

   a reinforcing layer (30,40,50,60,70,80,90,100) disposed between said tread portion (25) and said belt (27),

   said reinforcing layer (30,40,50,60,70,80,90,100) being formed by hooping a continuous strip (36,46,52,62,72,82,92,102) spirally in the circumferential direction,

   **characterized** in that the strip (36,46,52,62,72,82,92,102) has a rectangular cross section and is composed of 2 to 12 cords (32) covered with rubber so that the lateral edges of the belt (27) are completely covered and the ends of the continuous ribbon-like strip do not overlap each other.

2. A pneumatic tire as set forth in claim 1, **characterized** in that said continuous ribbon-like strip (36,46,52,62,72,82,92,102) is hooped with a variable hooping density in the lateral direction of said tire.

3. A pneumatic tire as set forth in claim 1, **characterized** in that said cord (32) of said continuous ribbon-like strip (36,46,52,62,72,82,92,102) is made of nylon.

4. (Fig.4) A pneumatic tire as set forth in claim 1, **characterized** in that said reinforcing layer (40) comprises a laterally inner reinforcing layer (42) which is hooped on a laterally outer end portion (27a) of said belt (27) with a predetermined spacing in said lateral direction of said tire, and a laterally outer reinforcing layer (44) which is hooped on said laterally outer end portion (27a) of said belt (27) without said spacing.

5. (Fig. 5) A pneumatic tire as set forth in claim 1, **characterized** in that said continuous ribbon-like strip (52) is hooped over the full width of said belt (27) so that the spacing between the adjacent looped portions is gradually reduced from a mid-circumferential portion (E) of the tire toward opposite outer end portions (27a) of said belt (27).

6. A pneumatic tire as set forth in claim 5, **characterized** in that the with of said continuous ribbon-like strip (52) is between 4 mm and 6 mm.

7. (Fig. 6) A pneumatic tire as set forth in claim 4, **characterized** in that said continuous ribbon-like strip (62) is hooped in two layers at said opposite outer end portion (27a) of said belt (27).

8. (Fig. 14) A pneumatic tire as set forth in claim 4, **characterized** in that said continuous ribbon-like strip is hooped in three layers at said opposite outer end portion (27a) of said belt (27).

9. A pneumatic tire as set forth in claim 7, **characterized** in that the width of said continuous ribbon-like strip (62) is between 4 mm and 11 mm.

## Revendications

1. Bandage pneumatique comprenant :

   une carcasse (23) constituée par des couches de câbles s'étendant d'un talon à l'autre;

   une bande de roulement (25) disposée radialement à l'extérieur de la carcasse (23) et s'étendant en direction circonférentielle dudit bandage pneumatique;

   une ceinture (27) disposée entre ladite carcasse (23) et ladite bande de roulement (25); et

   une couche de renforcement (30, 40, 50, 60, 70, 80, 90, 100) disposée entre ladite bande de roulement (25) et ladite ceinture (27),

   ladite couche de renforcement (30, 40, 50, 60, 70, 80, 90, 100) étant formée en enroulant une bande continue (36, 46, 52, 62, 72, 82, 92, 102) en spirales en direction circonférentielle, caractérisé en ce que la bande (36, 46, 52, 62, 72, 82, 92, 102) a une section transversale rectangulaire et est composée de deux à douze câbles (32) recouverts de caoutchouc, si bien que les bords latéraux de la ceinture (27) sont complètement recouverts et que les extrémités de la bande continue en forme de ruban ne se chevauchent pas mutuellement.

2. Bandage pneumatique selon la revendication 1, caractérisé en ce qu'on enroule ladite bande continue en forme de ruban (36, 46, 52, 62, 72, 82, 92, 102) avec une densité d'enroulement variable en direction latérale dudit bandage pneumatique.

3. Bandage pneumatique selon la revendication 1, caractérisé en ce qui ledit câble (32) de ladite bande continue en forme de ruban (36, 46, 52, 62, 72, 82, 92, 102) est réalisé en nylon.

4. (Figure 4) Bandage pneumatique selon la revendication 1, caractérisé en ce que ladite couche de renforcement (40) comprend une couche de renforcement latéralement interne (42) que l'on enroule autour d'une portion terminale latéralement externe (27a) de ladite ceinture (27) en ménageant un écartement prédéterminé dans ladite direction latérale dudit bandage pneumatique, ainsi qu'une couche de renforcement latéralement externe (44) que l'on enroule autour de ladite portion terminale latéralement externe (27a) de ladite ceinture (27) sans ménager ledit écartement.

5. (Figure 5) Bandage pneumatique selon la revendication 1, caractérisé en ce qu'on enroule ladite bande continue en forme de ruban (52) sur toute la largeur de ladite ceinture (27) de telle sorte que l'on réduit graduellement l'écartement ménagé entre les portions enroulées adjacentes depuis une portion circonférentielle médiane (E) du bandage pneumatique jusqu'aux portions terminales externes opposées (27a) de ladite ceinture (27).

6. Bandage pneumatique selon la revendication 5, caractérisé en ce que la largeur de ladite bande continue en forme de ruban (52) se situe entre 4 mm et 6 mm.

7. (Figure 6) Bandage pneumatique selon la revendication 4, caractérisé en ce qu'on enroule ladite bande continue en forme de ruban (62) en deux couches à ladite portion terminale externe opposée (27a) de ladite ceinture (27).

8. (Figure 14) Bandage pneumatique selon la revendication 4, caractérisé en ce qu'on enroule ladite bande continue en forme de ruban en trois couches à ladite portion terminale externe opposée (27a) de ladite ceinture (27).

9. Bandage pneumatique selon la revendication 7, caractérisé en ce que la largeur de ladite bande continue en forme de ruban (62) se situe entre 4 mm et 11 mm.

**Patentansprüche**

1. Ein pneumatischer Reifen mit einer aus Cordlagen aufgebauten, von einem zum anderen Reifenwulst reichenden Karkasse (23), einem radial auswärts der Karkasse (23) angeordneten und in Umfangsrichtung des Reifens verlaufenden Laufflächenabschnitt (25), einem zwischen der Karkasse (23) und dem Laufflächenabschnitt (25) angeordneten Gürtel (27) und einer zwischen dem Laufflächenabschnitt (25) und dem Gürtel (27) angeordneten Verstärkungsschicht (30, 40, 50, 60, 70, 80, 90, 100), wobei diese Verstärkungsschicht (30, 40, 50, 60, 70, 80, 90, 100) durch spiralförmiges Aufziehen eines fortlaufenden Streifens (36, 46, 52, 62, 72, 82, 92, 102) in der Umfangsrichtung gebildet ist, **dadurch gekennzeichnet, daß** der Streifen (36, 46, 52, 62, 72, 82, 92, 102) einen rechteckigen Querschnitt hat und aus zwei bis zwölf mit Gummi ummantelten Cords zusammengesetzt ist, so daß die Seitenränder des Gürtels (27) vollständig überdeckt sind und die Enden des fortlaufenden, bandartigen Streifens einander nicht überlappen.

2. Ein pneumatischer Reifen nach Anspruch 1, dadurch gekennzeichnet, daß der fortlaufende bandartige Streifen (36, 46, 52, 62, 72, 82, 92, 102) mit unterschiedlicher Aufziehdichte in Seitenrichtung des Reifens aufgezogen ist.

3. Ein pneumatischer Reifen nach Anspruch 1, dadurch gekennzeichnet, daß der Cord (32) des fortlaufenden bandartigen Streifens (36, 46, 52, 62, 72, 82, 92, 102) aus Nylon gefertigt ist.

4. (Figur 4) Ein pneumatischer Reifen nach Anspruch 1, dadurch gekennzeichnet, daß die Verstärkungsschicht (40) eine seitlich innere Verstärkungsschicht (42) umfaßt, die auf einem seitlich äußeren Endabschnitt (27a) des Gürtels (27) mit vorbestimmtem Abstand in Seitenrichtung des Reifens aufgezogen ist, und eine seitlich äußere Verstärkungsschicht (44), die auf den seitlich äußeren Endabschnitt (27a) des Gürtels (27) ohne einen solchen Abstand aufgezogen ist.

5. (Figur 5) Ein pneumatischer Reifen nach Anspruch 1, dadurch gekennzeichnet, daß der fortlaufende bandartige Streifen (52) über die volle Breite des Gürtels (27) aufgezogen ist, so daß der Abstand zwischen den benachbarten aufgezogenen Teilen von einem mittleren Umfangsteil (E) des Reifens zu den gegenüberliegenden äußeren Endteilen (27a) des Gürtels sich allmählich verringert.

6. Ein pneumatischer Reifen nach Anspruch 5, dadurch gekennzeichnet, daß die Breite des fortlaufenden bandartigen Streifens (52) zwischen 4 mm und 6 mm liegt.

7. (Figur 6) Ein pneumatischer Reifen nach Anspruch 4, dadurch gekennzeichnet, daß der fortlaufende bandartige Streifen (62) in zwei Lagen an dem gegenüberliegenden äußeren Endteil (27a) des Gürtels (27) aufgezogen ist.

8. (Figur 14) Ein pneumatischer Reifen nach Anspruch 4, dadurch gekennzeichnet, daß der kontinuierliche bandartige Streifen in drei Lagen an dem gegenüberliegenden äußeren Endteil (27a) des Gürtels (27) aufgezogen ist.

9. Ein pneumatischer Reifen nach Anspruch 7, dadurch gekennzeichnet, daß die Breite des fortlaufenden bandartigen Streifens (62) zwischen 4 mm und 11 mm liegt.

# FIG. 1

# FIG. 2

# FIG. 3

# F I G. 4

# F I G. 5

# F I G. 6

# FIG. 7

# FIG. 8

# FIG. 9
PRIOR ART

$W_1$

$W_{1C}$

2

1

1c

1a

B

1b

2a

# FIG. 10
PRIOR ART

4

1a

1a1

4

1

1a

1b

1b1

2

1b

# FIG. 11
PRIOR ART

$W_7$

7

B

9

$W_9$

# FIG. 12
PRIOR ART

11

7

7a

7

9

# FIG. 13

# FIG. 14